# EUROPÄISCHE PATENTSCHRIFT

(11) **EP 3 747 720 B1**
(45) Veröffentlichungstag und Bekanntmachung des Hinweises auf die Patenterteilung: **09.02.2022**
(21) Anmeldenummer: 20174815.9
(22) Anmeldetag: 14.05.2020
(51) Int. Cl.: B60W 50/08, B60W 60/00

(54) **VERFAHREN ZUM BETREIBEN EINES FAHRZEUGS MIT MEHREREN, VORGEGEBENEN LENK-SEMIAUTONOMMODI UND NICHT-LENK-SEMIAUTONOMMODI, SOWIE FAHRZEUGFÜHRUNGSSYSTEM**
VEHICLE GUIDANCE SYSTEM AND METHOD FOR OPERATING A VEHICLE WITH A PLURALITY OF PREDETERMINED MANUAL STEERING SEMIAUTONOMOUS MODES AND NON-MANUAL STEERING SEMIAUTONOMOUS MODES
PROCÉDÉ DE FONCTIONNEMENT D'UN VÉHICULE POURVU D'UNE PLURALITÉ DE MODES SEMI-AUTOMATIQUES À COMMANDE DE BRACQUAGE MANUELL ET À COMMANDE DE BRACQUAGE NON MANUELL, AINSI QUE SYSTÈME DE GUIDAGE DE VÉHICULE

(30) Priorität: 05.06.2019 DE 102019208136
(43) Veröffentlichungstag der Anmeldung: 09.12.2020
(73) Patentinhaber: VOLKSWAGEN AG, 38440 Wolfsburg (DE)
(72) Erfinder: Bader, Viktor, 38448 Wolfsburg (DE)

(56) Entgegenhaltungen:
- WO-A1-2013/117309
- WO-A1-2017/006015
- DE-A1-102009 033 752
- DE-A1-102017 121 619

## Beschreibung

Die Erfindung betrifft ein Verfahren zum Betreiben eines Fahrzeugs, wobei das Fahrzeug in einem Vollautonommodus vollautonom durch ein elektrisches Fahrzeugführungssystem betrieben wird, und in einem Semiautonommodus durch einen Nutzer semiautonom betrieben wird. Des Weiteren betrifft die Erfindung ein elektronisches Fahrzeugführungssystem mit einer Auswerteeinheit.

Fahrerassistenzsysteme, die den Fahrer beim Führen des Fahrzeugs unterstützen, sind mittlerweile in modernen Fahrzeugen weit verbreitet und werden ständig weiterentwickelt. So sind beispielsweise Adaptive Cruise Control (ACC), Blindspot Detection (BSD), also die Überwachung des toten Winkels, Emergency Brake Assistance (EBA) als Notfallbremssystem oder Lane Depart Warning (LDW) als Fahrspurassistent bekannt. Auch gibt es heutzutage bereits halbautomatische oder vollautomatische Einparksysteme. Die Systeme unterstützen insbesondere den Fahrer beim Führen eines Fahrzeugs und ermöglichen eine sichere Fortbewegungsfahrt für den Fahrer.

Mithilfe eines fünfstufigen Systems werden die verschiedenen Arten des autonomen Fahrens klassifiziert. Diese sind im Folgenden aufgelistet:
1. Level 1 - assistiertes Fahren: Der Tempomat, der die Geschwindigkeit und mittlerweile oft auch den Abstand zum Vordermann regelt, gehört zum 1. Level des autonomen Fahrens. Der Fahrer muss dabei immer das Lenkrad in der Hand halten und auf den Verkehr achten. Es ist weder vollautonomes noch teilautonomes Fahren. Die Systeme sind aber in ihrer Funktionalität eingeschränkt. Sie funktionieren zum Beispiel bei schlechten Witterungsbedingungen gegebenenfalls nur eingeschränkt und man kann sie nur ab und zu bis zu einer bestimmten Geschwindigkeit einsetzen.
2. Level 2 - teilautomatisiertes Fahren: Das Fahrzeug kann in bestimmten Situationen wie auf der Autobahn autonom geradeaus fahren, der Spur folgen, den Abstand zum Vordermann regeln. In Staus übernimmt das Fahrzeug komplett die Kontrolle. Auch hier gibt es Einschränkungen durch schlechtes Wetter, denn verschmutzte Sensoren behindern die Umgebungserfassung.
3. Level 3 - hochautomatisiertes Fahren: Hier übernehmen die Systeme die Fahrt schon fast komplett. Vor allem auf Autobahnen kann das Fahrzeug die komplette Steuerung übernehmen, inklusive Überholmanöver, Ausweichen und so weiter. Der Fahrer wird erst nach einer Vorwarnzeit von mehreren Sekunden dazu aufgefordert, das Lenkrad zu übernehmen. Trotz des hochautomatisierten Fahrens muss der Fahrer aber während der gesamten Zeit das Geschehen auf der Straße im Blick haben, um notfalls eingreifen zu können. Ab diesem Level beginnt das Fahrzeug, auch mit seiner Umwelt zu kommunizieren, insbesondere kann es sich mit anderen Fahrzeugen austauschen.
4. Level 4 - vollautomatisiertes Fahren: Das Fahrzeug bewegt sich in Level 4 die meiste Zeit alleine. Es parkt beispielsweise selbstständig ein. Es bewegt sich allein auch auf der Landstraße oder in der Stadt. Der Fahrer kann sich anderen Dingen widmen und muss nicht die ganze Zeit das Verkehrsgeschehen im Auge haben. Hier ist das Fahrzeug auch mit seiner Umwelt verbunden. Ampeln melden Rot- oder Grünphasen, andere Fahrzeuge melden einen Spurwechsel an.
5. Level 5 - fahrerloses Fahren: Ab Level 5 sind die Fahrzeuge komplett alleine unterwegs und sind auch nicht mehr mit einem Lenkrad ausgestattet.

Die DE 10 2009 033752 A1 offenbart ein Verfahren zum Betreiben eines Fahrzeugs, wobei das Fahrzeug in einem Vollautonommodus vollautonom durch ein elektronisches Fahrzeugführungssystem betrieben wird, und in einem Semiautonommodus durch einen Nutzer semiautonom betrieben wird, wobei- zumindest zwei unterschiedliche (z.B. Acc und iACC), diskrete Lenk-Semiautonommodi für das Fahrzeug vorgegeben werden, in denen das Fahrzeug beim semiautonomen Betreiben durch den Nutzer manuell zumindest gelenkt wird, und- zumindest zwei weitere diskrete Nicht-Lenk-Semiautonommodi (z.B. Spur-Pilot-Funktion und Autobahn-Pilot-Funktion) für das Fahrzeug vorgegeben werden, in denen das Fahrzeug beim semiautonomen Betreiben durch das Fahrzeugführungssystem vollautonom gelenkt wird, wobei- beim Fahren des Fahrzeugs wahlweise einer der diskreten Lenk-Semiautonommodi oder der Nicht-Lenk-Semiautonommodi durch den Nutzer des Fahrzeugs ausgewählt wird.

Die US 2017/0277182 A1 offenbart ein Fahrzeugsteuersystem. Das Fahrzeugsteuersystem weist eine Vielzahl von Sensoren auf, die an einem Fahrzeug angeordnet sind und jeweils Felder zum Erfassen des Äußeren des Fahrzeugs aufweisen. Ein Prozessor kann von den Sensoren erfasste Daten verarbeiten und eine Steuerung übermitteln. Die Steuerung steuert eine Vielzahl von Fahrzeugsystemen und kann das Fahrzeug autonom steuern, um das Fahrzeug autonom voranzutreiben. Das Fahrzeugsteuersystem weist eine Benutzereingabe auf, die von einem Insassen des Fahrzeugs selektiv betätigbar ist, sodass der Insasse einen von mindestens einem nichtautonomen Modus auswählen kann.

Die US 2015/0283998 A1 offenbart ein Verfahren zum Übergang zwischen Fahrmodi eines Fahrzeugs. Die Fahrmodi sind ein Autonomiefahrmodus (AD-Modus), ein Teilautonomiefahrmodus (PAD-Modus) und ein manueller Fahrmodus (MD-Modus). Ein Übergang vom PAD-Modus in den AD-Modus erfolgt durch Aktivieren des AD-Modus. Ein Übergang vom AD-Modus in den PAD-Modus erfolgt durch Aufheben einer Lenkradsperre, wenn sich der PAD-Modus in einem aktivierten Zustand befindet. Ein Übergang vom MD-Modus in den AD-Modus erfolgt durch Aktivieren des AD-Modus. Ein Übergang vom AD-Modus zum MD-Modus erfolgt durch Aufheben der Lenkradsperre, wenn sich der PAD-Modus in einem deaktivierten Zustand befindet. Die Moduszahl ist hier minimiert und die Handhabung für den Fahrer, also das Teilhaben am Führen des Fahrzeugs für den Fahrer minimiert.

Die WO 2014/165681 A1 beschreibt ein Verfahren und ein System zum Übertragen der Steuerung auf einen Fahrer. Eine Rechenvorrichtung, die ein Fahrzeug autonom steuert, kann konfiguriert sein, um eine Anforderung für einen Übergang des Fahrzeugs vom Autonomiemodus in den Manuellmodus durch eine Angabe des Fahrers zu empfangen. Die Rechenvorrichtung kann den Zustand des Fahrzeugs basierend auf Parametern bestimmen, die sich auf den Autonombetrieb des Fahrzeugs beziehen. Basierend auf dem Zustand des Fahrzeugs und der Anzeige kann die Rechenvorrichtung Anweisungen bestimmen, die dem Übergang der Steuerung entsprechen, die eine Strategie für den Übergang und die Zeitdauer enthalten können, die einem Übergang der Steuerung entsprechen. Die Rechenvorrichtung kann die Anweisungen bereitstellen, einen Übergang der Steuerung des Fahrzeugs vom Autonomiemodus zum Manuellmodus durchzuführen.

Dabei ergibt sich auch hier ein Nachteil, dass bei einem Fahren eines autonom betriebenen Fahrzeugs nur eine beschränkte Auswahl an teilautonomen Fahrmodi für einen Fahrer zur Verfügung gestellt werden können. Die individuelle und nutzergewünschte Teilhabe am Führen eines autonomen Fahrzeugs ist auch hier minimiert.

Aufgabe der vorliegenden Erfindung ist es, ein Verfahren und ein Fahrzeugführungssystem bereitzustellen, mit welchem eine vielfältigere Teilhabe eines Fahrers beim Führen eines vorrangig autonom betriebenen Fahrzeugs ermöglicht ist.

Diese Aufgabe wird durch ein Verfahren und ein Fahrzeugführungssystem gemäß den unabhängigen Patentansprüchen gelöst. Sinnvolle Weiterbildungen ergeben sich aus den Unteransprüchen.

Ein Aspekt der Erfindung betrifft ein Verfahren zum Betreiben eines Fahrzeugs, wobei das Fahrzeug in einem Vollautonommodus vollautonom durch ein elektronisches Fahrzeugführungssystem betrieben wird, und mit einem Semiautonommodus durch einen Nutzer semiautonom betrieben wird. Es werden zumindest zwei unterschiedliche, diskrete Lenk-Semiautonommodi vorgegeben, in denen das Fahrzeug beim semiautonomen Betreiben durch den Fahrer manuell zumindest gelenkt wird, und wobei sich diese beiden Lenk-Semiautonommodi zumindest dadurch unterscheiden, dass in einem der Lenk-Semiautonommodi zumindest eine Funktionskomponente des Fahrzeugs manuell durch den Nutzer betrieben wird, die in dem anderen Lenk-Semiautonommodus autonom durch das Fahrzeugführungssystem betrieben wird. Des Weiteren werden zumindest zwei weitere diskrete Nicht-Lenk-Semiautonommodi vorgegeben, in denen das Fahrzeug beim semiautonomen Betreiben durch das Fahrzeugführungssystem vollautonom gelenkt wird, wobei in den beiden Nicht-Lenk-Semiautonommodi eine Geschwindigkeitsveränderung des Fahrzeugs durch manuelle Betätigung eines Betätigungselements durch den Fahrer durchgeführt wird, wobei sich diese beiden Nicht-Lenk-Semiautonommodi zumindest in der Art und/oder Anzahl an verschiedenen manuell durchführbaren Geschwindigkeitsveränderungen unterscheiden. Das Fahrzeug wird also mit zumindest zwei unterschiedlichen Lenk-Semiautonommodi und zumindest zwei Nicht-Lenk-Semiautonommodi konfiguriert. Beim Fahren des Fahrzeugs wird wahlweise einer der diskreten Lenk-Semiautonommodi oder der Nicht-Lenk-Semiautonommodi durch den Nutzer des Fahrzeugs ausgewählt.

Durch die vorgeschlagene Erfindung wird eine umfänglichere Auswahl an unterschiedlichen Fahrmodi für ein Fahrzeug, das vorrangig vollautonom betrieben wird, bereitgestellt. Vorrangig bedeutet, dass der Vollautonommodus die Grundeinstellung des Betreibens des Fahrzeugs ist. Es ist die Möglichkeit geschaffen, dass der Fahrer, wenn er es wünscht, den Vollautonommodus beendet und einen von mehreren Lenk-Semiautonommodi oder einen von mehreren Nicht-Lenk-Semiautonommodi auswählt. Die Auswahl und Vielfältigkeit an einer Führungsteilhabe des Fahrers am Betreiben des Fahrzeugs ist spezifisch erhöht. Er erhält somit eine umfänglichere Auswahlmöglichkeit an spezifisch vorgegebenen beziehungsweise vorkonfigurierten Semiautonommodi, Damit ist eine fein gegliedertere Stufung der Teilhabe-Modi vorgegeben, so dass auch das Teilhaben des Fahrers am Führen des Fahrzeugs vielfältiger ermöglicht ist. Dadurch kann auch das Fahrgefühl für den Fahrer verbessert werden. Indem allerdings diese Variabilität durch die Überkategorien Lenken dürfen und Nichtlenken dürfen für den Fahrer unterschieden wird und in diesen Überkategorien dann individuell weiter spezifiziert wird, kann auch hohen Sicherheitsanforderungen, insbesondere beim Moduswechsel, genüge getan werden.

Abhängig von unterschiedlichen Situationen oder Kriterien kann ein gewisser Grad der Fahrzeugführung beziehungsweise der Fahrzeugsteuerung dem Nutzer des Fahrzeugs überlassen werden. Dadurch kann trotz der autonomen Fahrt des autonom betriebenen Fahrzeugs dem Nutzer ein gewisses Maß an Kontrolle der Fahrt überlassen werden. Insbesondere kann durch die vorliegende Erfindung dem Nutzer des Fahrzeugs auf möglichst einfache Art und Weise eine vordefinierte Fahrkontrolle des autonom betriebenen Fahrzeugs übergeben werden. Auf diese Art und Weise kann insbesondere der Fahrzeugnutzer gewisse Einflussmöglichkeiten bei einer autonomen Fahrt des autonom betriebenen Fahrzeugs durchführen. Somit kann beispielsweise ein Gefühl des Fahrspaßes während des Fahrbetriebs eines autonom betriebenen Fahrzeugs für den Nutzer erhöht werden. Insbesondere werden mithilfe des Fahrzeugführungssystems dem Nutzer abhängig von Fahrsicherheitsaspekten Teilaspekte der Fahrkontrolle während des autonom fahrenden Fahrbetriebs des autonom betriebenen Fahrzeugs übertragen.

Das elektronische Fahrzeugführungssystem kann die möglichen Semiautonommodi den äußeren Gegebenheiten in der Umgebung des Fahrzeugs anpassen. Insbesondere soll bei der Übertragung von Handlungen beim Führen des Fahrzeugs an den Fahrer, wie dies durch einen der genannten Semiautonommodi erfolgt, stets die Unfallvermeidungsmöglichkeit bei einem autonomen Fahrbetrieb des Fahrzeugs berücksichtigt werden. Dies erfolgt durch das Fahrzeugführungssystem.

Insbesondere kann der Nutzer des Fahrzeugs über eine Anzeigeeinheit beziehungsweise Ausgabeeinheit in dem Fahrzeug einen entsprechenden diskreten Lenk-Semiautonommodi oder einen Nicht-Lenk-Semiautonommodi auswählen. Beispielsweise kann die Auswahl über Betätigungsschalter am Fahrzeugarmaturenbrett durchgeführt werden. Ebenso ist es denkbar, dass die Auswahl über eine Spracherkennung eines akustischen Befehls des Nutzers durchgeführt werden kann.

Das Fahrzeugführungssystem stellt die zumindest zwei unterschiedlichen diskreten Lenk-Semiautonommodi und die zumindest zwei unterschiedlich diskreten Nicht-Lenk-Semiautonommodi für den Nutzer bereit. Abhängig von äußeren Umgebungen insbesondere in der Umgebung des Fahrzeugs und von einem Fahrzeugzustand kann das Fahrzeugführungssystem entsprechende Semiautonommodi für den Nutzer zur Verfügung stellen.

Insbesondere wird mit dem Betätigungselement ein Gaspedal oder ein Bremspedal dargestellt, mit welchem insbesondere die Geschwindigkeit des Fahrzeugs erhöht oder ein Bremsvorgang durchgeführt werden kann.

Gegebenenfalls wird das vorgeschlagene Verfahren insbesondere auch bei einer Fahrgeschwindigkeit des Fahrzeugs zumindest oder größer 30 km/h durchgeführt. Insbesondere können die Lenk-Semiautonmmodi und/oder Nicht-Lenk-Semiautonommodi durch den Nutzer auch bei einer Fahrgeschwindigkeit des Fahrzeugs von zumindest oder größer 40 km/h, insbesondere zumindest oder größer 50 km/h durchgeführt werden.

Insbesondere handelt es sich bei dem Fahrzeug um ein autonom betreibbares Fahrzeug, welches insbesondere eines oder mehrere der verschiedenen Levels des autonomen Fahrens verwendet. Insbesondere sind für diese vorliegende Erfindung nur die autonomen Level 1 bis 4 von Relevanz.

In einer vorteilhaften Ausgestaltung der Erfindung ist vorgesehen, dass in einem ersten diskreten Lenk-Semiautonommodus ein Lenken des Fahrzeugs und ein Betätigen des Betätigungselements des Fahrzeugs zur Beschleunigung durch den Nutzer manuell durchgeführt wird. Dadurch, dass der Nutzer des Fahrzeugs insbesondere mithilfe des Lenkrads das Fahrzeug lenken und mithilfe des Betätigungselements, insbesondere des Gaspedals, das Fahrzeug beschleunigen kann, erfährt der Nutzer ein Gefühl der Kontrolle der teilautonomen Fahrt des autonom betreibbaren Fahrzeugs. Dadurch kann insbesondere der Nutzer je nach seinem Befinden in das Fahrgeschehen eingreifen, sodass die Fahrt für den Nutzer angenehmer gestaltet werden kann. Insbesondere kann der erste diskrete Lenk-Semiautonommodus an einer Ausgabeeinheit in dem Fahrzeug durch den Nutzer ausgewählt werden. Insbesondere wird bei dem ersten diskreten Lenk-Semiautonommodus eine Maximalgeschwindigkeit des Fahrzeugs durch das elektronische Fahrzeugführungssystem überwacht. Insbesondere kann der Nutzer in einem Bereich, der durch das elektronische Fahrzeugführungssystem vorgegeben ist, Beschleunigungsvorgänge des Fahrzeugs durchführen. Insbesondere wird durch das elektronische Fahrzeugführungssystem in dem ersten diskreten Lenk-Semiautonommodus eine Abstandseinhaltung zwischen dem Fahrzeug und einem vorausfahrenden Fahrzeug durch das Fahrzeugführungssystem kontrolliert und überwacht sowie Bremsmanöver beziehungsweise Bremsvorgänge durch das Fahrzeugführungssystem durchgeführt.

Vorzugsweise ist vorgesehen, dass in einem zweiten diskreten Lenk-Semiautonommodus ein Lenken des Fahrzeugs und ein Betätigen von Betätigungselementen des Fahrzeugs zum Beschleunigen und zum Bremsen des Fahrzeugs manuell durch den Nutzer durchgeführt wird. Durch den freigegebenen und ausgewählten zweiten Lenk-Semiautonommodus kann der Nutzer Lenkmanöver sowie Beschleunigungsvorgänge und Bremsvorgänge manuell durchführen. Insbesondere erfolgen die Beschleunigung des Fahrzeugs mit einem Gaspedal und ein Bremsvorgang des Fahrzeugs mithilfe des Bremspedals des Fahrzeugs. Dadurch kann dem Nutzer des Fahrzeugs eine umfänglichere Kontrolle des Fahrzeugs bereitgestellt werden, sodass trotz des autonom betreibbaren Fahrzeugs eine weitgehende manuelle Kontrolle der Fahrt durch den Nutzer gegeben ist. In dem zweiten diskreten Lenk-Semiautonommodus kann insbesondere die Abstandseinhaltung zu einem Vorderwagen und die Einhaltung der Maximalgeschwindigkeit durch das elektronische Fahrzeugführungssystem überwacht werden. In dem zweiten diskreten Lenk-Semiautonommodus kann zumindest teilweise eine ganzheitliche Fahrkontrolle an dem Nutzer des Fahrzeugs in einem gewissen Spielraum zur Verfügung gestellt werden. Aber die Fahrweise und Fahrtüchtigkeit wird permanent hinsichtlich Fahrsicherheitsaspekte durch das elektronische Fahrzeugführungssystem überwacht. Insbesondere greift das elektronische Fahrzeugführungssystem bei erkannten bevorstehenden Gefahrensituationen ein. Insbesondere kann das elektronische Fahrzeugführungssystem eine ständige vorausschauende und permanente Berechnung der Fahrt durchführen und insbesondere den für den Nutzer bereitgestellten Spielraum der Fahrkontrolle anpassen. Dies bedeutet auch, dass das Fahrzeugführungssystem gegebenenfalls den ausgewählten Lenk-Semiautonommodus beenden kann und den Vollautonommodus einstellen kann.

Insbesondere überwacht das elektronische Fahrzeugführungssystem, insbesondere ständig, bevorstehende Lenkmanöver, Längs- und Querdynamik des Fahrzeugs und Beschleunigungen und Fahrgeschwindigkeiten des Fahrzeugs. Sobald nur tendenziell die Gefahr besteht, dass Grenzwerte für Gefahrensituationen überschritten werden, so greift das elektronische Fahrzeugführungssystem ein und übernimmt solange die Fahrkontrolle des Fahrzeugs, bis ein Gefahrenpotential wieder minimiert ist. Sobald die Gefahrensituation überstanden ist, kann dem Nutzer beispielsweise wieder der zweite diskrete Lenk-Semiautonommodus zur Verfügung gestellt werden, den er vor der Übernahme durch das Fahrzeugführungssystem ausgewählt hatte.

In einer vorteilhaften Ausgestaltung der Erfindung ist vorgesehen, dass in einem ersten diskreten Nicht-Lenk-Semiautonommodus, in dem kein manuelles Lenken durch den Fahrer zugelassen ist, ein Beschleunigen des Fahrzeugs durch das manuelle Betätigen des Betätigungselements durch den Nutzer durchgeführt wird. In dem ersten diskreten Nicht-Lenk-Semiautonommodus, welcher durch den Nutzer ausgewählt und von dem elektronischen Fahrzeugführungssystem bereitgestellt wurde, kann der Nutzer mithilfe des Gaspedals als Betätigungselement die Fahrzeuggeschwindigkeit des Fahrzeugs mithilfe von Beschleunigungsvorgängen anpassen. Dadurch hat der Nutzer bei einer autonomen Fahrt des Fahrzeugs trotzdem einen gewissen Einfluss auf die Fahrt und hat zumindest ein Gefühl der Kontrolle während der autonomen Fahrt. Das elektronische Fahrzeugführungssystem überwacht vorzugsweise, insbesondere stets, die maximal zulässige Geschwindigkeit und passt diese bei einem zu starken Betätigen des Betätigungselements selbst an. Die Lenkmanöver, Abstandseinhaltungen sowie Bremsmanöver werden bei diesem ersten Nicht-Lenk-Semiautonommodus vollständig von dem elektronischen Fahrzeugführungssystem des Fahrzeugs durchgeführt.

In der Erfindung ist optional vorgesehen, dass in einem zweiten diskreten Nicht-Lenk-Semiautonommodus, in dem kein manuelles Lenken durch den Fahrer zugelassen ist, ein Beschleunigen des Fahrzeugs und ein Bremsen des Fahrzeugs durch das manuelle Betätigen von Betätigungselementen des Fahrzeugs durch den Nutzer durchgeführt werden. In dem zweiten Nicht-Lenk-Semiautonommodus wird mithilfe des elektronischen Fahrzeugführungssystems dem Nutzer eine verbesserte Fahrkontrolle des Fahrzeugs im Vergleich beispielsweise zu dem ersten diskreten Nicht-Lenk-Semiautonommodus bereitgestellt. Dabei kann der Nutzer durch Betätigen des Bremspedals beziehungsweise des Gaspedals des Fahrzeugs einen manuellen Bremsvorgang beziehungsweise Beschleunigungsvorgang des Fahrzeugs durchführen. Dadurch kann der Nutzer insbesondere bei einer nach seiner Meinung gefährlichen bevorstehenden Gefahrensituation selbstständig die Geschwindigkeit verlangsamen oder die Geschwindigkeit des Fahrzeugs erhöhen. Insbesondere wird mithilfe des elektronischen Fahrzeugführungssystems die Maximalgeschwindigkeit des Fahrzeugs überprüft und gegebenenfalls wird die Geschwindigkeit automatisch durch das elektronische Fahrzeugführungssystem angepasst. Die Lenkmanöver und die Abstandseinhaltungen werden vollständig von dem elektronischen Fahrzeugführungssystem überwacht und übernommen.

In einer vorteilhaften Ausgestaltung der Erfindung ist vorgesehen, dass ein von dem Nutzer ausgewählter und durchgeführter diskreter Lenk-Semiautonommodus oder Nicht-Lenk-Semiautonommodus bei einer aktuellen oder bevorstehenden Gefahrensituation in der Umgebung des Fahrzeugs durch das Fahrzeugführungssystem gestoppt und das Fahrzeug im Vollautonommodus betrieben wird. Dadurch kann insbesondere die Sicherheit für den Nutzer des Fahrzeugs im Straßenverkehr erhöht werden, da mithilfe von Sensorik und Erfassungseinheiten des elektronischen Fahrzeugführungssystems ständig die Umgebung beziehungsweise ein Fahrzeugzustand des Fahrzeugs überwacht und analysiert wird. Beispielsweise können für bestimmte Gefahrensituationen Grenzwerte durch das elektronische Fahrzeugführungssystem definiert werden, wobei bei einer Überschreitung der vordefinierten Grenzwerte eine sofortige Übernahme der Fahrkontrolle des Fahrzeugs durch das elektronische Fahrzeugführungssystem vollautonom übernommen wird. Insbesondere erfolgt der Vollautonommodus des Fahrzeugs solange, bis sich die Grenzwerte für die Gefahrensituationen in einem unkritischen Bereich befinden. Sobald die Grenzwerte wieder eingehalten werden, kann das elektronische Fahrzeugführungssystem dem Nutzer den zuvor ausgewählten diskreten Lenk-Semiautonommodus oder Nicht-Lenk-Semiautonommodus wieder zur Verfügung stellen.

Beispielsweise kann bei einer bevorstehenden Gefahrensituation in der Umgebung des Fahrzeugs ein Warnsignal im Fahrzeug ausgegeben werden, sodass der Nutzer des Fahrzeugs über den bevorstehenden durchgeführten Vollautonommodus durch das elektronische Fahrzeugführungssystem in Kenntnis gesetzt werden kann. Ebenso kann bei aufgehobener Gefahrensituation der Nutzer wieder davon in Kenntnis gesetzt werden, dass er wieder den ausgewählten diskreten Lenk-Semiautonommodus oder Nicht-Lenk-Semiautonommodus durchführen kann. Insbesondere kann der Nutzer dies mithilfe einer Auswahlmöglichkeit wieder bestätigen und anschließend den gewählten Modus durchführen.

Vorzugsweise ist vorgesehen, dass eine Anzahl n der für den Nutzer tatsächlich aus der Gesamtzahl m von Semiautonommodi auswählbaren Semiautonommodi abhängig von einem Fahrzeugzustand des Fahrzeugs und/oder eines Umgebungsparameters einer Umgebung des Fahrzeugs und/oder von Charakteristika des Fahrers bestimmt wird. Insbesondere wird mithilfe des elektronischen Fahrzeugführungssystems überprüft und freigegeben, welche Anzahl n der Benutzer tatsächlich aus der Gesamtzahl m von Semiautonommodi auswählbare Semiautonommodi bereitgestellt werden. Somit kann dies situationsabhängig erfolgen. Insbesondere wird dadurch sichergestellt, dass ein zwar vorhandener aber aktuell unpassender beziehungsweise ungeeigneter Semiautonommodus dem Nutzer nicht bereitgestellt beziehungsweise nicht freigegeben wird. Insbesondere kann es sich bei dem Fahrzeugzustand des Fahrzeugs um fahrzeugspezifische technische Informationen beziehungsweise Zustände handeln. Diese werden durch das elektronische Fahrzeugführungssystem und insbesondere mit Sensorik im Fahrzeug überprüft. Mithilfe von Erfassungseinheiten wird die Umgebung des Fahrzeugs überprüft und auf mögliche Gefahrensituationen kontrolliert. Bei einer möglichen Gefahrensituation werden diese mithilfe der Umgebungsparameter dem elektronischen Fahrzeugführungssystem übermittelt und dementsprechend die Anzahl n der auswählbaren Semiautonommodi bereitgestellt. Ein weiteres Kriterium für die Auswahl n der Semiautonommodi für den Nutzer können fahrerspezifische Charakteristika des Fahrers des Fahrzeugs sein. Beispielsweise kann mithilfe einer Erfassungseinheit der aktuelle körperliche beziehungsweise gesundheitliche Zustand des Fahrers überprüft werden, ob dieser in der Lage ist, einen oder mehrere der Semiautonommodi durchzuführen. Beispielsweise kann ebenso ein Alter des Fahrers erfasst und ausgewertet werden und dementsprechend ein vorteilhafter Semiautonommodus dem Fahrer zur Auswahl bereitgestellt werden.

Beispielsweise kann als Charakteristika des Fahrers die Fahrtüchtigkeit dargestellt werden. Wenn eine sichere Kontrolle des Fahrzeugs seitens des Fahrers nicht mehr besteht, dann übernimmt das Fahrzeug beziehungsweise das elektronische Fahrzeugführungssystem vollständig die Kontrolle und fährt das Fahrzeug vollautonom. Beispielsweise kann erkannt werden, dass die Blickrichtung des Fahrers, insbesondere über einen definierten Zeitraum hinsichtlich einer Fahrrichtung abschweift, sodass der Fahrer nicht mehr für die Fahrkontrolle des Fahrzeugs befähigt ist. Darüber hinaus wird die maximale Geschwindigkeit so gedrosselt, dass die Fahrsicherheit bewahrt bleibt. Auch bei Kurvenfahrten wird prognostiziert, ob die Fahrtüchtigkeit des Fahrers gegeben ist, gegebenenfalls durch das Fahrzeugführungssystem des Fahrzeugs. Insbesondere werden die maximalen Fliehkräfte unter Einbezug der Wetterbedingungen, Kurvenradien und Fahrgeschwindigkeiten überwacht und sichergestellt, dass der Fahrer diese nicht überschreitet. Alle diese Parameter können bei der Entscheidung berücksichtigt werden, welche Anzahl n von Semiautonommodi durch das elektronische Fahrzeugführungssystem freigegeben werden.

In einer weiteren vorteilhaften Ausgestaltung der Erfindung ist vorgesehen, dass abhängig von einem elektronischen Nutzerprofil eines Nutzers des Fahrzeugs eine Auswahlmöglichkeit der vorgegebenen Lenk-Semiautonommodi und/oder Nicht-Lenk-Semiautonommodi für den Nutzer bereitgestellt wird, insbesondere dass ein elektronisches Nutzerprofil durch den Nutzer erzeugt wird und/oder durch das Fahrzeugführungssystem erzeugt wird. Durch Erzeugen eines elektronischen Nutzerprofils des Nutzers des Fahrzeugs kann eine effizientere und schnellere Auswahlmöglichkeit der für den Nutzer zur Verfügung gestellten Semiautonommodi bereitgestellt werden. Insbesondere kann bereits beim Einsteigen des Nutzers in das Fahrzeug mithilfe des zu dem eingestiegenen Nutzer zugehörigen elektronischen Nutzerprofils die Auswahlmöglichkeit der vorgegebenen Lenk-Semiautonommodi und/oder Nicht-Lenk-Semiautonommodi dem Nutzer zur Auswahl bereitgestellt werden. Insbesondere kann auch abhängig von dem Nutzerprofil automatisch durch das Fahrzeugführungssystem die Anzahl n von spezifischen, oben genannten Lenk-Semiautonommodi und/oder Nicht-Lenk-Semiautonommodi bestimmt werden.

Beispielsweise kann mithilfe eines tragbaren Kommunikationsendgeräts oder einer Onlineplattform der Nutzer das elektronische Nutzerprofil anlegen. Beispielsweise kann der Besitzer des Fahrzeugs für weitere mögliche fahrberechtigte Personen des Fahrzeugs individuelle elektronische Nutzerprofile anlegen. Ebenso kann das elektronische Fahrzeugführungssystem anhand vergangener ausgewählter Semiautonommodi durch den Nutzer ein entsprechendes elektronisches Nutzerprofil anlegen und für eine zukünftige Fahrt des entsprechenden Nutzers bereitstellen. Beispielsweise können die elektronischen Nutzerprofile in einem fahrzeugunabhängigen Server abgelegt und aufgerufen werden. Es kann vorgesehen sein, dass beim Anlegen eines Nutzerprofils spezifische Pflichtinformationen eingegeben werden müssen. Dadurch kann das Fahrzeugführungssystem eine Kategorisierung der Nutzer durchführen und somit eine passendere Anzahl n von Semiautonommodi für einen Nutzer zusammenstellen.

In einem weiteren vorteilhaften Ausführungsbeispiel der Erfindung ist vorgesehen, dass der Nutzer des Fahrzeugs durch eine Erfassungseinheit des Fahrzeugs erfasst wird und der erfasste Nutzer dem elektronischen Nutzerprofil zugerechnet wird und abhängig von dem zugeordneten elektronischen Nutzerprofil für den Nutzer entsprechend dem elektronischen Nutzerprofil und/oder dem Nutzer Lenk-Semiautonommodi und/oder Nicht-Lenk-Semiautonommodi zur Auswahl bereitgestellt werden. Insbesondere kann durch das Erfassen des Nutzers des Fahrzeugs eine effizientere und raschere Darstellung der Auswahlmöglichkeiten für einen entsprechend dem Nutzer zugeordneten Semiautonommodi zur Auswahl an einer Ausgabe- beziehungsweise Anzeigeeinheit im Fahrzeug bereitgestellt werden. Insbesondere erfolgt die Erfassung des Nutzers des Fahrzeugs mithilfe von Sensoreinheiten, wie einem Kamerasystem im Fahrzeug, welches zur Identifizierung des Nutzers ausgebildet ist. Insbesondere erfolgt mit der Personenidentifizierung des Nutzers mithilfe der Erfassungseinheit eine Identifizierung der freizugebenden Semiautonommodi für den Nutzer. Dadurch kann erreicht werden, dass dem Nutzer keine Semiautonommodi bereitgestellt werden, welche dieser nicht nutzen darf. Insbesondere kann durch die Erfassung des Nutzers eine Kontrolle der Fahrfähigkeit des Nutzers durchgeführt werden. Insbesondere werden die in dem elektronischen Nutzerprofil gespeicherten Lenk-Semiautonommodi und/oder Nicht-Lenk-Semiautonommodi dem Nutzer beziehungsweise dem erfassten Nutzer zugeordnet und nach Erfassung auf der Anzeige- beziehungsweise Ausgabeeinheit im Fahrzeug zur Auswahl bereitgestellt. Beispielsweise können die zur Auswahl bereitgestellten Semiautonommodi an einem Head-up-Display oder auf einer Augmented-Reality-Brille angezeigt werden.

Optional können weitere Lenk-Semiautonommodi für den Nutzer bereitgestellt werden. Beispielsweise kann in einem dritten diskreten Lenk-Semiautonmmodus nur ein Lenken des Fahrzeugs manuell durch den Nutzer durchgeführt werden. Das elektronische Fahrzeugführungssystem kann in dem dritten Lenk-Semiautonommodus die Geschwindigkeitsregelung, Abstandseinhaltung sowie Bremsvorgänge durchführen.

In einem beispielsweise vierten diskreten Lenk-Semiautonommodus kann dem Nutzer ein Lenken des Fahrzeugs und ein Betätigen des Betätigungselements zum Bremsen des Fahrzeugs zugestanden werden. Dabei überwacht das elektronische Fahrzeugführungssystem insbesondere die Geschwindigkeitsregelung und die Abstandseinhaltung vom Vorderwagen.

Gegebenenfalls kann dem Nutzer durch das elektronische Fahrzeugführungssystem ein Manueller-Fahrmodus bereitgestellt werden. In diesem Fahrmodus hat der Nutzer die vollständige Kontrolle über das Fahrzeug.

Beispielsweise kann ein dritter diskreter Nicht-Lenk-Semiautonommodus dem Nutzer zur Auswahl bereitgestellt werden. In diesem Modus kann der Nutzer nur einen Bremsvorgang durch Betätigen des Betätigungselements manuell durchführen. Insbesondere kann mit dem dritten Nicht-Lenk-Semiautonommodus ein Notbremsvorgang durch den Nutzer durchgeführt werden. Beispielsweise kann bei einem Notbremsvorgang des Fahrzeugs durch den Nutzer, das elektronische Fahrzeugführungssystem das Fahrzeug so steuern, dass das Fahrzeug an einem sicheren Halteort, wie beispielsweise ein Fahrbahnrand, zum Stehen kommt. Beispielsweise kann das elektronische Fahrzeugführungssystem auch einen Fahrlehrermodus dem Nutzer bereitstellen. Mit dem Fahrlehrermodus können speziell Nutzer mit keiner Fahrerlaubnis das Fahrzeug zumindest semiautonom betreiben. Dabei kann das elektronische Fahrzeugführungssystem den Fahrvorgang des Nutzers überwachen und gegebenenfalls eingreifen, sodass keine Verkehrsgefährdungspotentiale entstehen. Damit kann auch ein Fahrertraining und somit ein, insbesondere schrittweises, erlernen des zumindest teilweise manuellen Fahrzeugführens durchgeführt werden.

Ein weiterer Aspekt der Erfindung betrifft ein elektronisches Fahrzeugführungssystem mit einer Auswerteeinheit, wobei die Auswerteeinheit zum Durchführen eines Verfahrens nach einem der vorher geschilderten Aspekte ausgebildet ist. Insbesondere wird das Verfahren mit dem Fahrzeugführungssystem durchgeführt. Insbesondere kann mithilfe des Fahrzeugführungssystems das Fahrzeug wahlweise vollautonom oder teilautonom betrieben werden. Insbesondere kann das Fahrzeugführungssystem einem Nutzer des Fahrzeugs zumindest zwei unterschiedliche diskrete Lenk-Semiautonommodi oder zumindest zwei unterschiedliche diskrete Nicht-Lenk-Semiautonommodus zur Auswahl zur Verfügung stellen. Insbesondere können jeweils mehr als zwei diskrete Lenk-Semiautonommodi und/oder Nicht-Lenk-Semiautonommodi bereitgestellt werden. Das Fahrzeugführungssystem kann insbesondere abhängig von Umgebungsparametern in der Umgebung des Fahrzeugs oder eines Fahrzeugzustands des Fahrzeugs die Anzahl der für den Nutzer tatsächlich zur Auswahl bereitgestellten Semiautonommodi bereitstellen. Beispielsweise kann das Fahrzeugführungssystem elektronische Nutzerprofile anlegen, mit welchen dem Nutzer die zur Auswahl gestellten Semiautonommodi bereitgestellt werden. Das Fahrzeugführungssystem kann abhängig von einer Gefahrensituation jederzeit die Fahrkontrolle des Fahrzeugs komplett übernehmen, sodass das Fahrzeug in einen vollautonomen Fahrbetrieb übergeht. Insbesondere kann bei einer Übernahme der Fahrkontrolle des Fahrzeugs dem Nutzer mithilfe einer Ausgabeeinheit im Fahrzeug signalisiert werden, dass nun die Kontrolle des Fahrzeugs durch das Fahrzeugführungssystem vollständig übernommen wird. Beispielsweise kann dies durch Anzeige auf einem Display oder durch Farbveränderung der Hintergrundbeleuchtung in dem Fahrzeug oder durch akustische Signale oder durch haptische Bewegungen am Lenkrad oder am Sitz oder durch Vibrationen im Sitz oder Lenkrad dargestellt beziehungsweise signalisiert werden.

Insbesondere können mithilfe des elektronischen Fahrzeugführungssystems mehrere Fahrmodi des semiautonomen Fahrbetriebs des Fahrzeugs bereitgestellt werden. Beispielsweise kann einem Nutzer des Fahrzeugs nur die Möglichkeit gegeben werden, eine Notbremsung durchzuführen.

Beispielsweise können bestimmte Fahrstrecken beziehungsweise Teilstrecken im Straßenverkehr nur für einen vollautomatisierten Fahrmodus freigegeben werden, wobei in diesen Streckenabschnitten das Fahrzeug trotz eines ausgewählten Semiautonommodus des Nutzers vollständig die Kontrolle des Fahrzeugs übernehmen muss. Dies kann ebenso dem Nutzer des Fahrzeugs mithilfe eines Hinweises mitgeteilt werden.

Ein weiterer unabhängiger Aspekt der Erfindung betrifft ein Fahrzeug mit einem Fahrzeugführungssystem, gemäß dem oben genannten Aspekt oder einer vorteilhaften Ausführung davon. Das Fahrzeug weist insbesondere Sensorsysteme und Erfassungseinheiten auf, um einen Fahrzeugzustand beziehungsweise einen Umgebungsparameter in der Umgebung des Fahrzeugs erfassen und auswerten zu können. Insbesondere ist das Fahrzeug in der Lage, einen Vollautonommodus durchzuführen oder einen Semiautonommodus durch einen Nutzer semiautonom durchführen lassen zu können.

Ein weiterer unabhängiger Aspekt der Erfindung betrifft ein Computerprogrammprodukt, umfassend Befehle, die bei der Ausführung des Programms durch einen Computer diesen veranlassen, ein Verfahren nach einem der vorher geschilderten Aspekte auszuführen. Insbesondere kann das Computerprogrammprodukt Bestandteil eines elektronischen Fahrzeugführungssystems sein. Mithilfe des Computerprogrammprodukts kann das elektronische Fahrzeugführungssystem unterschiedliche diskrete Lenk-Semiautonommodi und/oder diskrete Nicht-Lenk-Semiautonommodi für einen Nutzer eines Fahrzeugs bereitstellen. Insbesondere kann das Computerprogrammprodukt abhängig von einem Fahrzeugzustand des Fahrzeugs und/oder eines Umgebungsparameters in der Umgebung des Fahrzeugs und/oder von Charakteristika des Fahrers bestimmen, welche Anzahl n der für den Nutzer tatsächlich aus der Gesamtzahl m von Semiautonommodi auswählbaren Semiautonommodi bereitgestellt werden.

Zu der Erfindung gehören auch Weiterbildungen des erfindungsgemäßen Fahrzeugführungssystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Fahrzeugführungssystems hier nicht noch einmal beschrieben.

Die Erfindung umfasst auch die Kombinationen der Merkmale der beschriebenen Ausführungsformen.

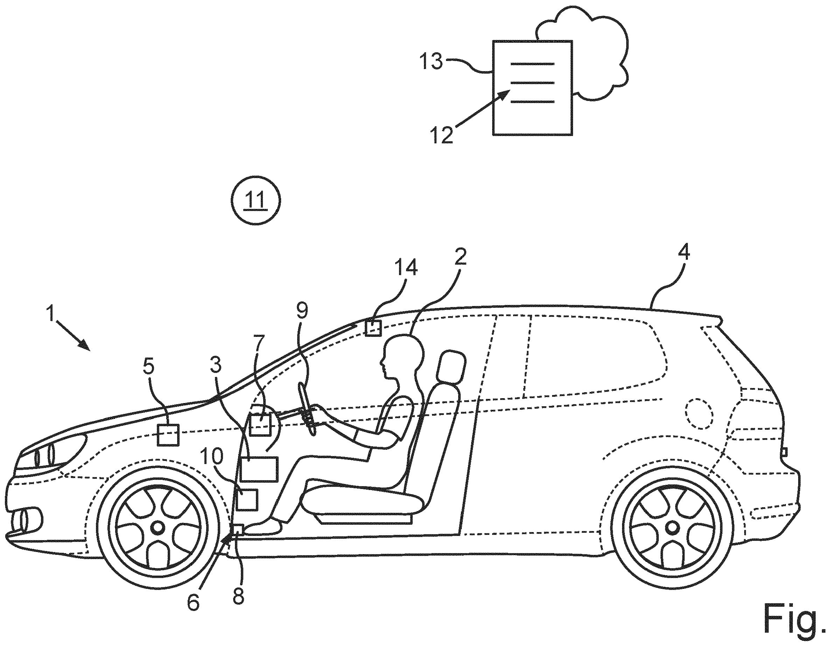

Im Folgenden ist ein Ausführungsbeispiel der Erfindung beschrieben. Hierzu zeigt die einzige Figur ein beispielhaftes Fahrzeugführungssystem zum Betreiben eines Fahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Insgesamt zeigt die Figur ein Fahrzeugführungssystem 1. Mit dem Fahrzeugführungssystem 1 kann ein Fahrzeug 4 betrieben werden, wobei das Fahrzeug 4 in einem Vollautonommodus durch ein elektronisches Fahrzeugführungssystem 1 betrieben wird und mit einem Semiautonommodus durch einen Nutzer 2 semiautonom betrieben wird. Beispielsweise umfasst das Fahrzeugführungssystem 1 eine Auswerteeinheit 3, mit welcher unterschiedliche diskrete Lenk-Semiautonommodi oder unterschiedliche diskrete Nicht-Lenk-Semiautonommodi für den Nutzer 2 bereitgestellt werden können. Insbesondere können zumindest zwei unterschiedliche diskrete Lenk-Semiautonommodi vorgegeben werden, indem das Fahrzeug 4 beim semiautonomen Betreiben durch den Fahrer 2 manuell zumindest gelenkt werden kann. Diese beiden Lenk-Semiautonommodi unterscheiden sich zumindest dadurch, dass bei einem der Lenk-Semiautonommodi zumindest eine Funktionskomponente 5 des Fahrzeugs 4 manuell durch den Nutzer 2 betrieben werden kann, die in dem anderen Lenk-Semiautonommodus autonom durch das Fahrzeugführungssystem 1 betrieben werden kann. Des Weiteren können mit der Auswerteeinheit 3 des Fahrzeugführungssystems 1 zumindest zwei weitere diskrete Nicht-Lenk-Semiautonommodi vorgegeben werden, in denen das Fahrzeug 4 beim semiautonomen Betreiben durch das Fahrzeugführungssystem 1 gelenkt werden kann, wobei in beiden Nicht-Lenk-Semiautonommodi eine Geschwindigkeitsveränderung des Fahrzeugs 4 durch manuelle Betätigung eines Betätigungselements 6 durch den Fahrer 2 durchgeführt wird, wobei sich diese beiden Nicht-Lenk-Semiautonommodi zumindest in der Art und/oder Anzahl an verschiedenen manuell durchführbaren Geschwindigkeitsveränderungen unterscheiden.

Der Nutzer 2 des Fahrzeugs 4 hat insbesondere die Möglichkeit, beim Fahren des Fahrzeugs 4 wahlweise einer der diskreten Lenk-Semiautonommodi oder der Nicht-Lenk-Semiautonommodi auszuwählen. Insbesondere erfolgt das Auswählen des entsprechenden Semiautonommodus auf einer Ausgabeeinheit 7 durch den Nutzer 2 in dem Fahrzeug 4. Beispielsweise kann die Ausgabeeinheit 7 die Auswahlmöglichkeit anhand von berührungssensitiven Schaltflächen oder manuelle Schaltelemente oder durch Spracheingabe beziehungsweise Sprachausgabe bereitstellen. Beispielsweise kann es sich bei der Ausgabeeinheit 7 um das Infotainmentsystem des Fahrzeugs 4 handeln. Bei dem Fahrzeug 4 kann es sich insbesondere um ein autonom betreibbares Fahrzeug handeln.

Bei der Auswahl eines ersten diskreten Lenk-Semiautonommodus durch den Nutzer 2 kann der Nutzer 2 während einer Fahrt des Fahrzeugs 4 ein Lenken des Fahrzeugs 4 und ein Betätigen des Betätigungselements 6 des Fahrzeugs 4 zur Beschleunigung manuell durchführen. Insbesondere wird zur Beschleunigung des Fahrzeugs ein Gaspedal 8 des Fahrzeugs 4 durch den Nutzer 2 betätigt. Sollte der Nutzer 2 des Fahrzeugs 4 einen zweiten diskreten Lenk-Semiautonommodus auswählen, kann der Nutzer 2 ein Lenken des Fahrzeugs 4 und ein Betätigen von Betätigungselementen 6 des Fahrzeugs 4 zur Beschleunigung und zum Bremsen des Fahrzeugs 4 manuell durchführen. Insbesondere erfolgt das Lenken des Fahrzeugs 4 durch den Nutzer 2 mithilfe eines Lenkrads 9 des Fahrzeugs 4. Der Nutzer 2 kann mithilfe des Gaspedals 8 die Geschwindigkeit des Fahrzeugs 4 erhöhen und mithilfe eines Bremspedals 10 die Geschwindigkeit des Fahrzeugs 4 verringern oder einen Bremsvorgang durchführen.

Die Auswerteeinheit 3 des elektronischen Fahrzeugführungssystems 1 kann beispielsweise dem Nutzer 2 auf der Ausgabeeinheit 7 einen ersten diskreten Nicht-Lenk-Semiautonommodus zur Verfügung stellen. In diesem Modus kann der Nutzer 2 ein Beschleunigen des Fahrzeugs 4 durch das manuelle Betätigen des Betätigungselements 6 durchführen. Insbesondere erfolgt die Beschleunigung mithilfe des Gaspedals 8 des Fahrzeugs 4. Sollte der Nutzer 2 den Wunsch haben, dass er ein Beschleunigen des Fahrzeugs 4 und ein Bremsen des Fahrzeugs 4 durch manuelle Betätigung von Betätigungselementen 6 durchführen will, so muss der Nutzer 2 mithilfe der Ausgabeeinheit 7 einen zweiten diskreten Nicht-Lenk-Semiautonommodus auswählen.

Insbesondere kann mithilfe des Fahrzeugführungssystems 1 ein von dem Nutzer 2 ausgewählter und durchgeführter diskreter Lenk-Semiautonommodus oder Nicht-Lenk-Semiautonommodus bei einer aktuellen oder bevorstehenden Gefahrensituation in der Umgebung 11 des Fahrzeugs 4 durch das Fahrzeugführungssystem 1 gestoppt werden. Insbesondere wird dann das Fahrzeug 4 mithilfe des Fahrzeugführungssystems 1 in einem Vollautonommodus betrieben. Beispielsweise kann die Auswerteeinheit 3 eine Anzahl n der für den Nutzer 2 tatsächlich aus der Gesamtzahl m von Semiautonommodi auswählbaren Semiautonommodus abhängig von einem Zustand des Fahrzeugs 4 und/oder eines Umgebungsparameters in der Umgebung 11 des Fahrzeugs 4 und/oder von Charakteristika des Nutzers 2 berechnet und bereitgestellt. Insbesondere erfolgt die Überwachung der Umgebungsparameter in der Umgebung 11 mithilfe von Sensorsystemen.

Beispielsweise können elektronische Nutzerprofile 12 des Nutzers 2 des Fahrzeugs 4 durch den Nutzer 2 und/oder durch das Fahrzeugführungssystem 1 erzeugt werden. Die elektronischen Nutzerprofile 12 können in einem externen Server 13 zwischengespeichert werden. Insbesondere ist der Server 13 beispielsweise ein fahrzeugexternes Backend. Das Fahrzeugführungssystem 1 kann abhängig von dem elektronischen Nutzerprofil 12 des Nutzers 2 des Fahrzeugs 4 eine Auswahlmöglichkeit der vorgegebenen Lenk-Semiautonommodi und/oder Nicht-Lenk-Semiautonommodi für den Nutzer 2 mithilfe der Ausgabeeinheit 7 bereitstellen. Beispielsweise kann der Nutzer 2 des Fahrzeugs 4 durch eine Erfassungseinheit 14 des Fahrzeugs 4 erfasst werden. Insbesondere wird der Nutzer 2 beim Einstieg in das Fahrzeug 4 durch die Erfassungseinheit 14 erfasst. Bei der Erfassungseinheit 14 kann es sich insbesondere um ein Kamerasystem handeln. Nachdem der Nutzer 2 mithilfe der Erfassungseinheit 14 erfasst wurde, wird der erfasste Nutzer 2 dem elektronischen Nutzerprofil 12 zugeordnet und abhängig von dem zugeordneten elektronischen Nutzerprofil 12 wird dem Nutzer 2 ein bestimmte Lenk-Semiautonommodi und/oder Nicht-Lenk-Semiautonommodi zur Auswahl auf der Ausgabeeinheit 7 bereitgestellt.

Insbesondere kann mit der Erfassungseinheit 14 eine Personenidentifizierung bei einem Einstieg des Nutzers 2 in das Fahrzeug 4 durchgeführt werden. Insbesondere kann bei der Erfassung des Nutzers 2 mithilfe der Erfassungseinheit 14 eine Fahrtüchtigkeit des Nutzers 2 beurteilt werden. Beispielsweise kann der erfasste Nutzer 2 so identifiziert werden, dass insbesondere das Fahrzeugführungssystem 1 eine Information über das beispielsweise Alter des Nutzers 2 übermittelt bekommt. Dadurch kann insbesondere die Auswerteeinheit 3 einen entsprechenden Semiautonommodus für den Nutzer 2 bereitstellen.

### Bezugszeichenliste

- 1: Fahrzeugführungssystem
- 2: Nutzer
- 3: Auswerteeinheit
- 4: Fahrzeug
- 5: Funktionskomponente
- 6: Betätigungselement
- 7: Ausgabeeinheit
- 8: Gaspedal
- 9: Lenkrad
- 10: Bremspedal
- 11: Umgebung
- 12: Nutzerprofil
- 13: Server
- 14: Erfassungseinheit

## Patentansprüche

1. Verfahren zum Betreiben eines Fahrzeugs (4), wobei das Fahrzeug (4) in einem Vollautonommodus vollautonom durch ein elektronisches Fahrzeugführungssystem (1) betrieben wird, und in einem Semiautonommodus durch einen Nutzer (2) semiautonom betrieben wird, wobei
- zumindest zwei unterschiedliche, diskrete Lenk-Semiautonommodi für das Fahrzeug (4) vorgegeben werden, in denen das Fahrzeug (4) beim semiautonomen Betreiben durch den Nutzer (2) manuell zumindest gelenkt wird, und wobei sich diese beiden Lenk-Semiautonommodi zumindest dadurch unterscheiden, dass in einem der Lenk-Semiautonommodi zumindest eine Funktionskomponente (5) des Fahrzeugs (4) manuell durch den Nutzer (2) betrieben wird, die in dem anderen Lenk-Semiautonommodus autonom durch das Fahrzeugführungssystem (1) betrieben wird, und
- zumindest zwei weitere diskrete Nicht-Lenk-Semiautonommodi für das Fahrzeug (4) vorgegeben werden, in denen das Fahrzeug (4) beim semiautonomen Betreiben durch das Fahrzeugführungssystem (1) vollautonom gelenkt wird, wobei in beiden Nicht-Lenk-Semiautonommodi eine Geschwindigkeitsveränderung des Fahrzeugs (4) durch manuelle Betätigung eines Betätigungselements (6) durch den Nutzer (2) durchgeführt wird, wobei sich diese beiden Nicht-Lenk-Semiautonommodi zumindest in der Art und/oder Anzahl an verschiedenen manuell durchführbaren Geschwindigkeitsveränderungen unterscheiden, wobei
- beim Fahren des Fahrzeugs (4) wahlweise einer der diskreten Lenk-Semiautonommodi oder der Nicht-Lenk-Semiautonommodi durch den Nutzer (2) des Fahrzeugs (4) ausgewählt wird.

2. Verfahren nach Anspruch 1,
**dadurch gekennzeichnet, dass**
in einem ersten diskreten Lenk-Semiautonommodus ein Lenken des Fahrzeugs (4) und ein Betätigen des Betätigungselements (6) des Fahrzeugs (4) zur Beschleunigung durch den Nutzer (2) manuell durchgeführt wird.

3. Verfahren nach einem der Ansprüche 1 oder 2,
**dadurch gekennzeichnet, dass**
in einem zweiten diskreten Lenk-Semiautonommodus ein Lenken des Fahrzeugs (4) und ein Betätigen von Betätigungselementen (6) des Fahrzeugs (4) zur Beschleunigung und zum Bremsen des Fahrzeugs (4) manuell durch den Nutzer (2) durchgeführt wird.

4. Verfahren nach einem der vorhergehenden Ansprüche,
**dadurch gekennzeichnet, dass**
ein einem ersten diskreten Nicht-Lenk-Semiautonommodus ein Beschleunigen des Fahrzeugs (4) durch das manuelle Betätigen des Betätigungselements (6) durch den Nutzer (2) durchgeführt wird.

5. Verfahren nach einem der vorhergehenden Ansprüche,
**dadurch gekennzeichnet, dass**
in einem zweiten diskreten Nicht-Lenk-Semiautonommodus ein Beschleunigen des Fahrzeugs (4) und ein Bremsen des Fahrzeugs (4) durch das manuelle Betätigen von Betätigungselementen (6) des Fahrzeugs (4) durch den Nutzer (2) durchgeführt wird.

6. Verfahren nach einem der vorhergehenden Ansprüche,
**dadurch gekennzeichnet, dass**
ein von dem Nutzer (2) ausgewählter und durchgeführter diskreter Lenk-Semiautonommodus oder Nicht-Lenk-Semiautonommodus bei einer aktuellen oder bevorstehenden Gefahrensituation in der Umgebung (11) des Fahrzeugs (4) durch das Fahrzeugführungssystem (1) gestoppt und das Fahrzeug (4) im Vollautonommodus betrieben wird.

7. Verfahren nach einem der vorhergehenden Ansprüche,
**dadurch gekennzeichnet, dass**
eine Anzahl n der für den Nutzer (2) tatsächlich aus der Gesamtanzahl m von Semiautonommodi auswählbaren Semiautonommodi abhängig von einem Fahrzeugzustand des Fahrzeugs (4) und/oder eines Umgebungsparameters in der Umgebung (11) des Fahrzeugs (4) und/oder von Charakteristika des Nutzers (2), insbesondere durch das elektronische Fahrzeugführungssystem (1) des Fahrzeugs (4), bestimmt wird.

8. Verfahren nach einem der vorhergehenden Ansprüche,
**dadurch gekennzeichnet, dass**
abhängig von dem elektronischen Nutzerprofil (12) eines Nutzers (2) des Fahrzeugs (4) eine Auswahlmöglichkeit der vorgegebenen Lenk-Semiautonommodi und/oder Nicht-Lenk-Semiautonommodi für den Nutzer (2) bereitgestellt wird, insbesondere das ein elektronisches Nutzerprofil (12) durch den Nutzer (2) erzeugt wird und/oder durch das elektronische Fahrzeugführungssystem (1) erzeugt wird.

9. Verfahren nach Anspruch 8,
**dadurch gekennzeichnet, dass**
der Nutzer (2) des Fahrzeugs (4) durch eine Erfassungseinheit (14) des Fahrzeugs (4) erfasst wird, und der erfasste Nutzer (2) dem elektronischen Nutzerprofil (12) zugeordnet wird, und abhängig von dem zugeordneten elektronischen Nutzerprofil (12) dem Nutzer (2) Lenk-Semiautonommodi und/oder Nicht-Lenk-Semiautonommodi zur Auswahl bereitgestellt werden.

10. Fahrzeugführungssystem (1) mit einer Auswerteeinheit (3), wobei die Auswerteeinheit (3) Durchführen eines Verfahrens nach einem der vorhergehenden Ansprüche ausgebildet ist.

## Claims

1. Method for operating a vehicle (4), wherein in a fully autonomous mode the vehicle (4) is operated fully autonomously by an electronic vehicle guidance system (1), and in a semiautonomous mode it is operated semiautonomously by a user (2), wherein
- at least two different, discrete steering semiautonomous modes, in which the vehicle (4) is at least steered manually by the user (2) in semiautonomous operation, are prescribed for the vehicle (4) and wherein these two steering semiautonomous modes differ at least in that, in one of the steering semiautonomous modes, at least one functional component (5) of the vehicle (4) that is operated autonomously by the vehicle guidance system (1) in the other steering semiautonomous mode is operated manually by the user (2), and
- at least two further discrete non-steering semiautonomous modes, in which the vehicle (4) is steered fully autonomously by the vehicle guidance system (1) in semiautonomous operation, are prescribed for the vehicle (4), wherein in both non-steering semiautonomous modes a change of the speed of the vehicle (4) is carried out by the user (2) by manual actuation of an actuating element (6), wherein these two non-steering semiautonomous modes differ at least in the type and/or number of different changes of speed that can be manually carried out, wherein
- when driving the vehicle (4), one of the discrete steering semiautonomous modes or non-steering semiautonomous modes is selected according to choice by the user (2) of the vehicle (4).

2. Method according to Claim 1,
**characterized in that**
in a first discrete steering semiautonomous mode, a steering of the vehicle (4) and an actuation of the actuating element (6) of the vehicle (4) for acceleration are carried out manually by the user (2) .

3. Method according to either of Claims 1 and 2, **characterized in that**
in a second discrete steering semiautonomous mode, a steering of the vehicle (4) and an actuation of actuating elements (6) of the vehicle (4) for acceleration and for braking of the vehicle (4) are carried out manually by the user (2).

4. Method according to one of the preceding claims, **characterized in that**
in a first discrete non-steering semiautonomous mode, an acceleration of the vehicle (4) is carried out by the user (2) by the manual actuation of the actuating element (6).

5. Method according to one of the preceding claims, **characterized in that**
in a second discrete non-steering semiautonomous mode, an acceleration of the vehicle (4) and a braking of the vehicle (4) are carried out by the user (2) by the manual actuation of actuating elements (6) of the vehicle (4).

6. Method according to one of the preceding claims, **characterized in that**
in the event of a current or imminent dangerous situation in the environment (11) of the vehicle (4), a discrete steering semiautonomous mode or non-steering semiautonomous mode that has been selected and carried out by the user (2) is stopped by the vehicle guidance system (1) and the vehicle (4) is operated in the fully autonomous mode.

7. Method according to one of the preceding claims, **characterized in that**
a number n of the semiautonomous modes actually available for selection for the user (2) from the total number m of semiautonomous modes is determined dependent on a vehicle state of the vehicle (4) and/or an environment parameter in the environment (11) of the vehicle (4) and/or on characteristics of the user (2), in particular by the electronic vehicle guidance system (1) of the vehicle (4).

8. Method according to one of the preceding claims, **characterized in that**
dependent on the electronic user profile (12) of a user (2) of the vehicle (4), a selection possibility of the prescribed steering semiautonomous modes and/or non-steering semiautonomous modes is provided for the user (2), in particular an electronic user profile (12) is generated by the user (2) and/or is generated by the electronic vehicle guidance system (1) .

9. Method according to Claim 8, **characterized in that** the user (2) of the vehicle (4) is detected by a detecting unit (14) of the vehicle (4), and the detected user (2) is assigned to the electronic user profile (12), and, dependent on the assigned electronic user profile (12), the user (2) is provided with steering semiautonomous modes and/or non-steering semiautonomous modes for selection.

10. Vehicle guidance system (1) with an evaluation unit (3), wherein the evaluation unit (3) is designed for carrying out a method according to one of the preceding claims.

## Revendications

1. Procédé permettant de faire fonctionner un véhicule (4), le véhicule (4) étant amené à fonctionner dans un mode d'autonomie entière par un système de guidage de véhicule électronique (1) de manière entièrement autonome et dans un mode de semi-autonomie par un utilisateur (2) de manière semi-autonome, dans lequel
- au moins deux modes semi-autonomes de conduite discrets et différents étant spécifiés pour le véhicule (4) dans lesquels le véhicule (4) est au moins conduit manuellement par l'utilisateur (2) lors du fonctionnement semi-autonome, et ces deux modes semi-autonomes de conduite se distinguant au moins par le fait que dans l'un des modes semi-autonomes de conduite, l'utilisateur (2) fait fonctionner manuellement au moins un composant fonctionnel (5) du véhicule (4) que le système de guidage de véhicule (1) fait fonctionner de manière autonome dans l'autre mode semi-autonome de conduite, et
- au moins deux autres modes semi-autonomes autres que de conduite discrets étant spécifiés pour le véhicule (4) dans lesquels le véhicule (4) est conduit de manière entièrement autonome par le système de guidage de véhicule (1) lors du fonctionnement semi-autonome, dans lequel, dans les deux modes semi-autonomes autres que de conduite, un changement de vitesse du véhicule (4) est effectué par un actionnement manuel d'un élément d'actionnement (6) par l'utilisateur (2), ces deux modes semi-autonomes autres que de conduite se distinguant au moins par le type et/ou le nombre des différents changements de vitesse pouvant être réalisés manuellement, dans lequel
- lors de la conduite du véhicule (4), au choix l'un des modes semi-autonomes de conduite ou des modes semi-autonomes autres que de conduite discrets est sélectionné par l'utilisateur (2) du véhicule (4).

2. Procédé selon la revendication 1, **caractérisé en ce que** dans un premier mode semi-autonome de conduite discret, une conduite du véhicule (4) et un actionnement de l'élément d'actionnement (6) du véhicule (4) sont effectués manuellement par l'utilisateur (2) pour l'accélération.

3. Procédé selon l'une quelconque des revendications 1 ou 2, **caractérisé en ce que** dans un deuxième mode semi-autonome de conduite discret, une conduite du véhicule (4) et un actionnement d'éléments d'actionnement (6) du véhicule (4) sont effectués manuellement par l'utilisateur (2) pour l'accélération et pour le freinage du véhicule (4).

4. Procédé selon l'une quelconque des revendications précédentes, **caractérisé en ce que** dans un premier mode semi-autonome autre que de conduite discret, une accélération du véhicule (4) est effectuée par l'utilisateur (2) par l'actionnement manuel de l'élément d'actionnement (6).

5. Procédé selon l'une quelconque des revendications précédentes, **caractérisé en ce que** dans un deuxième mode semi-autonome autre que de conduite discret, une accélération du véhicule (4) et un freinage du véhicule (4) sont effectués par l'utilisateur (2) par l'actionnement manuel d'éléments d'actionnement (6) du véhicule (4).

6. Procédé selon l'une quelconque des revendications précédentes, **caractérisé en ce qu'**un mode semi-autonome de conduite ou un mode semi-autonome autre que de conduite discret, sélectionné et effectué par l'utilisateur (2), est arrêté par le système de guidage de véhicule (1) dans une situation de danger actuelle ou imminente dans l'environnement (11) du véhicule (4), et le véhicule (4) fonctionne dans le mode d'autonomie entière.

7. Procédé selon l'une quelconque des revendications précédentes, **caractérisé en ce qu'**un nombre n des modes semi-autonomes pour l'utilisateur (2) sélectionnables réellement parmi le nombre total m de modes semi-autonomes est déterminé en particulier par le système de guidage de véhicule électronique (1) du véhicule (4) en fonction d'un état de véhicule du véhicule (4) et/ou d'un paramètre d'environnement dans l'environnement (11) du véhicule (4) et/ou de caractéristiques de l'utilisateur (2).

8. Procédé selon l'une quelconque des revendications précédentes, **caractérisé en ce qu'**en fonction du profil utilisateur électronique (12) d'un utilisateur (2) du véhicule (4), une option de sélection des modes semi-autonomes de conduite et/ou des modes semi-autonomes autres que de conduite spécifiés est fournie à l'utilisateur (2), en particulier **en ce qu'**un profil utilisateur électronique (12) est généré par l'utilisateur (2) et/ou est généré par le système de guidage de véhicule électronique (1).

9. Procédé selon la revendication 8, **caractérisé en ce que** l'utilisateur (2) du véhicule (4) est détecté par une unité de détection (14) du véhicule (4), et l'utilisateur détecté (2) est associé au profil utilisateur électronique (12), et en fonction du profil utilisateur électronique associé (12), des modes semi-autonomes de conduite et/ou des modes semi-autonomes autres que de conduite sont fournis à l'utilisateur (2) pour la sélection.

10. Système de guidage de véhicule (1), comprenant une unité d'évaluation (3), l'unité d'évaluation (3) étant réalisée pour effectuer un procédé selon l'une quelconque des revendications précédentes.
